# EUROPEAN PATENT APPLICATION

(11) **EP 2 283 728 A2**
(43) Date of publication of application: **16.02.2011**
(21) Application number: 10380067.8
(22) Date of filing: 05.05.2010
(51) Int. Cl.: A01N 37/02, A01N 37/06, A01N 37/10, A01N 43/50, A01P 3/00

(54) **Formulation based on fungistatic food additives and application method**

(30) Priority: 05.08.2009 ES 200930563 P
(71) Applicant: Decco Iberica Post Cosecha, S.A., 46988 Poligono Fuente Del Jarra (ES)
(72) Inventor: Mascaros Torres, Juan, 46988 Polígono Fuente del Jarro (Valencia) (ES); Brunetti Amaya, Osvaldo, 46988 Polígono Fuente del Jarro (Valencia) (ES)
(74) Representative: Ungria Lopez, Javier

(57) **Abstract**

The present invention relates to a fungicide formulation characterized by comprising from 2 to 10% w/v of at least one fungistatic food additive selected from a group consisting of sorbates, propionates, benzoates, carbonates and bicarbonates, as well as any combination thereof. Likewise, is an object of this invention, a method for obtaining said formulation, as well as its use for treating at least one post-harvest product. Finally, it is an object of this invention a coating characterized by comprising the described fungicide formulation in its composition.

## Description

### Field of the invention

The present invention belongs to the field of fungicides, namely to the post-harvest fungicides.

### State of the art prior to the invention

Fruits and vegetables, especially, citrus fruits require fungicide treatments in order to prevent the rottenness after harvesting and during the commercialization period, i.e. the time span from the harvest until reaching the final consumer, also known as post-harvest or post- harvesting period. In this way, with the object of preventing the losses produced by rotting phenomena, which would economically make unfeasible the commercialization of this type of products, different treatments based on the utilization of post-harvest fungicides have been developed in recent years.

The application conditions of this type of treatments in closed areas, although involving particularities related to the usual phytosanitary treatments, essentially, they are not free from certain problems from the toxicological point of view, having repercussions on other type of phytosanitary treatments, as the treatments based on pre-harvest fungicides. Among these problems, for example, the ones related to the appearance of resistance or to the efficiency or sensitivity loss for the organisms object of its control should be mentioned. In summary, the main problems derived from the treatments based on post-harvest fungicides are the following:
- in the first place, due to its usual use in confined areas, generally in chambers and warehouses, are more prone to efficiency loss, as well as the appearance of resistances;
- on the other hand, the fact that the sector to which they belong is a reduced market, implies that the number of registered and authorized active matters in post-harvest is not too numerous, which in turn means a short rotation in treatments and, accordingly, a higher risk of appearance of resistance in comparison with other types of phytosanitary treatments;
- in turn, the current pressure by the supermarket chains regarding the absence of rotten in the marketed products, together with an increasing pressure for limiting as much as possible the synthesis phytosanitary products to be employed in post-harvest, namely, in warehouses for preparing fruits and vegetables and, at the same time, reducing the final residue percentage to the values admitted by the regulation, are contributing to the appearance of resistances, as well as the incomplete application of treatments and, accordingly, a loss in the efficiency thereof;
- the result of the above is an Increase of the rottenness problems, the appearance of resistances and, ultimately, client complaints. Likewise, there is an increasing higher demand, in certain markets, with respect to the limitation in the percentage of fungicide residues, as well as with respect to the need for treating food with products with the lowest environmental and toxicological impact possible, achieving at the same time reducing the application of synthesis fungicides to the minimum.

Fungicide treatments usually applied are based on synthesis chemical products, imazalil, thiabendazole, guazatine, and orthophenylphenol among others, being the most employed with the object of controlling the incidence of rottenness. Given the wide spectrum of diseases affecting the crops in the post-harvest, especially citrus fruits, and the difficulty for applying the appropriate measures to them, as rotation or combination of treatments can be, there is the risk for the production of resistance phenomena or low efficiency of fungicides. In turn, due to the commercial pressure of some markets, which is causing that the number of synthesis fungicide treatments is being increasingly limited, even being limited to a single type of fungicide (generally, imazalil) in occasions, the use of those alone, in addition to not controlling all the spectrum of diseases, is causing an increasing development of resistances. This, added to the increasingly higher demands from distribution networks for limiting the percentage of authorized fungicide residues to half or one third of the one admitted, is causing, in addition to serious phytosanitary problems, a great comparative disadvantage with respect to third countries which, due to their remoteness, can employ appropriate doses of fungicides since the time required for the transportation allows the degradation and reduction of the percentage of final residue.

As a solution to the aforementioned problems, an object of the present invention is to provide a new formulation based on fungistatic food additives. The fungistatic efficiency of certain food additives has long been known, having being employed even before the appearance of the synthesis fungicides as the only means for fighting post-harvesting diseases. Among these additives, for example, potassium sorbate, carbonates and bicarbonates should be mentioned, frequently used as preservatives in the food industry. In recent years, likewise, new additives initially unknown have appeared which also present certain fungistatic efficiency. These fungistatics, although with less efficiency than the synthesis fungicides, nevertheless present a protective activity with a far from negligible efficiency. However, due to an inadequate frequent use thereof, the obtained results from their use alone in the post-harvesting treatment have generally demonstrated a lower efficiency in comparison with the results obtained by the use of synthesis modern fungicides, more specifically, active. This has caused the abandonment of this important protection line against post-harvesting diseases with respect to the alternative of utilizing synthesis fungicides.

Thus, it is an object of the present invention, to present an alternative formulation for the protection against post-harvest rottenness, characterized by requiring a minimum or inexistent percentage of synthesis fungicides. Likewise, it is an object of protection of the Invention the treatment carried out by means of the application of said formulation, either individually or in combination with synthesis fungicides thus reducing the percentage required for said synthesis fungicides and attaining, at the same time, the control or inhibition of the resistances derived from usual treatments.

Therefore, it is an object of the present invention to present a new fungicide formulation able to accomplish the following requirements:
- in the first place, the use of a minimum number of synthesis fungicides without it affecting the objectives relative to the rottenness control;
- on the other hand, the reduction of the usual doses of synthesis fungicides, thus reducing the residue level, but without it resulting in the appearance of resistances;
- finally, the control and inhibition in the appearance of resistances to the synthesis fungicides that could be used, even in the case wherein the application doses were lower than the established ones.

### Description of the invention

In this way, the present invention is directed to a new fungicide formulation characterized by comprising from 2 to 10% w/v of at least one fungistatic food additive selected from a group consisting of sorbates, propionates, benzoates, carbonates and bicarbonates, as well as any combination thereof.

Additionally, the formulation can comprise, in turn, a stabilizing agent, preferably, in a percentage lower than or equal to 6% w/v.

In a preferred embodiment of the invention, the food additive consists of potassium sorbate, which is preferably utilized in a dose of 30,000 ppm (3% w/v).

Likewise, an especially preferred embodiment of the invention is **characterized in that** the formulation does not comprise surfactants of nonionic nature in its composition. The reason for excluding this type of compounds is due to that, as it is known, surfactants of nonionic nature, as those authorized in the formulation of food additives (polyoxyethylenated sorbitan tristearate, sorbitan monopalmitate, or sorbitan monooleates, among others), inhibit the efficiency of food additives, especially, potassium sorbate.

Additionally, it is also known that sorbates, especially potassium sorbate, suffer degradations In aqueous solution, this degradation being faster as the sorbate concentration in the solution is higher, as well as by the presence of nonionic surfactants from different chemical families, as sorbitans (*Tweens*).

Thus, it is an object of the present invention to provide an efficient formulation for the use in post-harvesting treatments and which, at the same time, allows controlling the degradation effect that would make unfeasible its commercialization because of the lack of stability.

For that, in a preferred embodiment of the invention, the formulation of the invention is characterized by comprising, in turn, at least one stabilizing agent, which is utilized with the object of controlling the degradation phenomenon of the food additives in solution. Preferably, said stabilizing agent consists of citric acid.

Likewise, it is an additional object of the invention, the application method of the formulation previously described to at least one post-harvest product, preferably selected between fruits and vegetables, and more preferably to citrus fruits.

The fact that the formulation of the invention comprises the use of food additives makes it necessary the application method thereof to be suitable since, otherwise, the fungistatic effect of the food additives is not exploited In the most effective manner.

Therefore, the present invention relates to a new method, characterized by comprising a first step for preparing the treatment broth, followed by its application to at least one post-harvest product, preferably, by drencher or pond immersion.

Regarding the first step for preparing the treatment broth, it consists in the dissolution of the formulation object of the invention in water at a temperature comprised between 20 and 68°C, more preferably, between 60 and 62°C, since at this temperature interval a synergist effect is attained, increasing the reduction efficiency of the rotten.

Next, the application of the treatment broth to the post-harvest product is carried out, which step can be carried out by drencher or pond immersion. In the case of being carried out by drencher, the preferred time for carrying out this step is from 10 to 40 seconds, more preferably from 20 to 30 seconds, whereas in the case of being carried out by pond immersion, said step is preferably carried out during a time comprised between 5 and 60 seconds, more preferably between 10 and 40 seconds.

Preferably, the application range of the treatment broth with respect to the post-harvest product is from 1000 to 3000 liters of treatment broth per 40 to 120 tons of the post-harvest product.

In a preferred embodiment of the invention, the application method is characterized by comprising, in turn, a subsequent step for drenching or rinsing the post-harvest product with tap water. The approximate water flow rate utilized in this step is comprised between 0 and 5 liters of water per ton of post-harvest product.

Likewise, an even more preferred embodiment of the method comprises an additional step, subsequent to the previous drenching or rinsing step, which consists of concocting or waxing the post-harvest product. This step is preferably carried out according to the usual concocting or waxing methods.

In turn, with the object of preventing fungal and microbiological contamination of the treatment broth, the application method of the fungicide formulation of the invention can also comprise, in the step for preparing the treatment broth, the addition of at least one disinfectant selected from a group consisting of quaternary ammonium chloride, peracetic acid, hydrogen peroxide, chlorine dioxide and sodium hypochlorite and any combination thereof. This disinfectant is preferably utilized, in concentrations comprised between 100 and 1000 ppm with respect to the treatment broth.

The fact of adding the disinfectant in the step of preparation of the treatment broth and not directly to the formulation is due to the oxidation effect of the disinfectants, which produces an increase in the degradation of the compounds making up the formulation.

In turn, in a particular embodiment of the invention, the application method comprises adding at least one synthesis fungicide agent, preferably selected from a group consisting of thiabendazole, imazalil, orthophenylphenol, guazatine, pyrimethanil, fludioxonil, azoxystrobin, tebuconazole, prochloraz, fenheximid, iprodione, ciproxonil, methyl thiophanate and propiconazole, or any combination thereof,

The addition of these types of synthesis fungicides can be carried out in a step subsequent to the application of the formulation object of protection, or can either be applied in combination with it. In this last case, the synthesis fungicide agents are preferably added in the step for preparing the treatment broth.

In this way, due to the utilization of synthesis fungicides in a combined manner with the formulation object of the invention, reducing the usual required doses of said synthesis fungicides is possible, as well as the final amount of residues, thus complying with the demands on this matter from the distribution networks.

Finally it is an object of this invention, a coating for a post-harvest product, preferably, fruits and/or vegetables, characterized by comprising from 2 to 10% w/v of at least one fungistatic food additive selected from a group consisting of sorbates, propionates, benzoates, carbonates and bicarbonates, as well as any combinations thereof. Preferably, the used fungistatic additive is potassium sorbate.

Preferably, said coating can consist of an edible coating or a wax coating, either natural or synthetic.

In a preferred embodiment of the invention, the described coating can, in turn, comprise from 0.2 to 1% w/v of at least one fungicide selected from a group consisting of didecyldimethylammonium chloride (DDAC), didecyldimethylammonium carbonate (DDACarbonate), imazalil, thiabendazole, orthophenylphenol, guazatine, propiconazole, tebuconazole, pyrimethanil, fludioxonil, azoxystrobin, prochloraz, iprodione, or methyl thiophanate among others, as well as any combination thereof. In a preferred manner, the used fungicide is selected between didecyldimethylammonium chloride (DDAC), didecyldimethylammonium carbonate (DDACarbonate),

### Examples

Next, by way of explanation but in a not limitative manner, a series of examples of the invention object of protection are included.

### Example 1

The potassium sorbate in aqueous solution suffers a significant degradation which prevents the commercialization of the formulation from being guaranteed with all the composition's guarantees for a suitable efficiency. As it has been previously mentioned, it is possible to stop said degradation by adding a stabilizing agent, preferably, adding citric acid.

In this first example, the degradation of the formulation object of protection was studied in the first place. This formulation is very fast, reaching up to 29% under normal conditions in just two weeks. For example, in a 4% potassium sorbate solution, the results were the following:
- initial concentration (T0): 40 mg/l
- final concentration (T+14 days): 2.84 mg/l

Then, the same experiments were carried out, with the difference that, in this case, citric acid was added in a 1:10 ratio of the active matter to the fungicide formulation, as well as the addition to other type of products is done (see, for example, US 2866819), In this case, the obtained results were the following:
- initial concentration (T0); 40 mg/l
- final concentration (T+14 days ): 38 mg/l

This demonstrates the stabilizing effect of the citric acid to admissible levels, achieving controlling the degradation of the product by more than 24% (passing from 29 to 5% of degradation).

### Example 2

The potassium sorbate in aqueous solution together with the presence of disinfectant agents, utilized for preventing its fungal contamination or reducing the incidence risk of resistances, suffers a large degradation which accelerates the already significant degradation which it suffers under normal conditions.

Thus, if 0.05% (500 ppm) of quaternary ammonium is added to the solution of the previous example of 4% potassium sorbate with 0.4% of stabilizing, the degradation Is raised again, eliminating the stabilizing effect:
- initial concentration (T0): 40 mg/l
- final concentration (T+14 days ): 32 mg/l

As it can be seen, the degradation again reaches very high values, of the order of 20%, whereby the mixture *in situ* of the disinfectant agent in the potassium sorbate formulation is not recommendable, its use being recommended in an additional final step.

### Example 3

Lastly, the artificial inoculation with *Penicillium digitatum* and *Penicillium italicum* (most important post-harvest fungus) was carried out in various citric varieties, subjecting them to immersion after 24 hours during 5, 15, 30 or 60 seconds under water or aqueous solutions of the formulation based on potassium sorbate in order to obtain a 30,000 ppm (3% w/v) concentration of potassium sorbate, at a water temperature of 20, 53, 58, 62, 65 or 68°C. Subsequently, they were rinsed with tap water and incubated during 7 days at 20°C.

The most efficient treatment was the application of potassium sorbate at 62°C during a time of 30 or 60 seconds, reducing the infections by *Penicillium* (both fungus) in 20. 5. 50, 80 or 95% in clemenules and nadorcott mandarin, fine lemon, ortanique mandarin and Valencia oranges varieties, respectively.

After 60 days of storage at 50°C, the *Penicillium digitatum* and *Penicillium italicum* that were developed in valencian oranges treated with potassium sorbate at 62°C during 60 seconds were reduced In 96 and 83% respectively.

The combined treatments of potassium sorbate and synthesis fungicide (imazalil) at room temperature, allowed reducing the imazalil dose with a good efficiency in the *Penicillium digitatum* control.

### Example 4

In this last example, the synergist effect of the combination of imazalil (synthetic fungicide) and potassium sorbate was studied, against the individual utilization of imazalil and potassium sorbate, as well as against a control without treatment.

The employed used doses were 20,000 ppm (2%) potassium sorbate and 200 ppm imazalil (the usual used dose being from 375 to 450 ppm), this is, 50% of the usual imazalil used dose.

The results obtained from the inoculation tests with *Penicillium digitatum* and *Penicillium italicum*, with respect to the rotten percentage, were the following:

**Table 1. Penicillium digitatum**

| DAT/ rotten% | 5 | % | 10 | % |
|---|---|---|---|---|
| Inoculated without treatment | 78 | 69.0 | 102 | 90.2 |
| Inoculated + sorbate | 3 | 2.9 | 12 | 11,7 |
| Inoculated + imazaili | 18 | 16.07 | 42 | 37.5 |
| Inoculated + potassium sorbate + imazalil | 3 | 2.9 | 7 | 6.9 |

**Table 2. Penicillium italicum**

| DAT/ rotten% | 5 | % | 10 | % |
|---|---|---|---|---|
| Inoculated without treatment | 75 | 66.4 | 106 | 93.8 |
| Inoculated + sorbate | 0 | 0 | 7 | 6.8 |
| Inoculated + imazalil | 7 | 6.25 | 22 | 19.6 |
| Inoculated + potassium sorbate + imazalil | 0 | 0 | 2 | 1.9 |

As it can be seen from the previous results, imazalil at doses lower than the recommended achieves lower results to those obtained by using potassium sorbate individually. However, the combination of low doses of imazalil and potassium sorbate (at low application doses, of about 20,000 ppm) has allowed obtaining an important synergy, resulting in the maximum efficiency of all the tests made.

### Example 5

In this example, an edible coating characterized by comprising a fungistatic additive was prepared, according to the following formulation:

**Table 3. Formulation A. Edible coating**

| Component | % w/v |
|---|---|
| Fungistatic food additive | 2-10 |
| Polysaccharide/ protein/ gums | 0-80 |
| Lipids | 0-80 |
| Plasticizers | 0-30 |
| Emulsifiers | 0-30 |
| Ethyl alcohol | 0-40 |
| Water | q.s. |

### Example 6

In this example, an edible coating characterized by comprising a fungistatic additive together with a fungicide agent was prepared, according to the following formulation:

**Table 4. Formulation B. Edible coating**

| Component | % w/v |
|---|---|
| Fungistatic food additive | 2-10 |
| Polysaccharide/ protein/ gums | 0-80 |
| Lipids | 0-80 |
| Plasticizers | 0-30 |
| Emulsifiers | 0-30 |
| Ethyl alcohol | 0-40 |
| Fungicide | 0-2 |
| Water | q.s. |

### Example 7

In this example, a natural or synthetic, waxen coating characterized by comprising a fungistatic additive was prepared, according to the following formulation:

**Table 5. Formulation C. Natural or synthetic, waxen coating**

| Component | % w/v |
|---|---|
| Fungistatic food additive | 2-10 |
| Natural or synthetic wax | 0-60 |
| Alkali | 0-20 |
| Emulsifiers | 0-30 |
| Formulation additives (antifoaming and plasticizers) | 0-1 |
| Ethyl alcohol | 0-40 |
| Water | q.s. |

### Example 8

In this example, a natural or synthetic waxen coating, characterized by comprising a fungistatic additive together with a fungicide agent was prepared, according to the following formulation:

**Table 6. Formulation D. Natural or synthetic waxen coating**

| Component | % w/v |
|---|---|
| Fungistatic food additive | 2-10 |
| Natural or synthetic wax | 0-60 |
| Alkali | 0-20 |
| Emulsifiers | 0-30 |
| Formulation additives (antifoaming and plasticizers) | 0-1 |
| Ethyl alcohol | 0-40 |
| Fungicide | 0-2 |
| Water | q.s. |

## Claims

1. Fungicide formulation **characterized by** comprising from 2 to 10% w/v of at least one fungistatic food additive selected from a group consisting of sorbates, propionates, benzoates, carbonates and bicarbonates, as well as any combination thereof.

2. Formulation, according to claim 1, **characterized in that** it further comprises a stabilizing agent in a percentage equal to or lower than 6% w/v.

3. Formulation, according to claim 2, wherein the stabilizing agent is citric acid.

4. Formulation, according to any one of claims 1 to 3, wherein the food additive is potassium sorbate in a proportion of 3% w/v.

5. Formulation, according to any one of claims 1 to 4, **characterized in that** it is exempted from surfactants of nonionic nature.

6. Application method of a formulation according to any one of the previous claims, **characterized in that** it comprises a first step for preparing the treatment broth by dissolving said formulation in water, followed by a second step for applying said treatment broth to at least one post-harvest product by drencher or pond immersion.

7. Method, according to claim 6, wherein the application range of the treatment broth is from 1000 to 3000 liters of treatment broth per about 40 to 120 tons of post-harvest product.

8. Method, according to one of claims 6 or 7, **characterized in that** it comprises an additional drencher step of the post-harvest product with tap water.

9. Method, according to claim 8, **characterized in that** it comprises a step subsequent to the drencher step for the waxing of the post-harvest product.

10. Method, according to any one of claims 6 to 9, **characterized in that** it also comprises, in the step for preparing the treatment broth, the addition of at least one disinfectant selected from a group consisting of quaternary ammonium chloride, peracetic acid, hydrogen peroxide, chlorine dioxide and sodium hypochlorite, as well as any combination thereof.

11. Method, according to claim 10, wherein the disinfectant is utilized in a concentration comprised between 100 and 1000 ppm with respect to the treatment broth.

12. Method, according to any one of claims 6 to 11, **characterized in that** it additionally comprises adding at least one synthesis fungicide agent, selected from a group consisting of thiabendazole, imazalil, orthophenylphenol, guazatine, pyrimethanil, fludioxonil, azoxystrobin, tebuconazole, prochloraz, fenheximid, iprodione, ciproxonil, methyl thiophanate and propiconazole, as well as any combination thereof.

13. Method, according to claim 12, wherein said addition of the synthesis fungicide agent is carried out in a step subsequent to the application of the formulation object of protection.

14. Method, according to claim 12, wherein said addition of the synthesis fungicide agent is carried out in the step for preparing the treatment broth.

15. Use of the formulation according to any one of claims 1 to 5 for treating at least one post-harvest product.

16. Coating **characterized by** comprising from 2 to 10% w/v of at least one fungistatic food additive selected from a group consisting of sorbates, propionates, benzoates, carbonates and bicarbonates, as well as any combination thereof.

17. Coating, according to claim 16, **characterized in that** it comprises from 0.2 to 1% w/v of at least one fungicide selected from a group consisting of didecyldimethylammonium, didecyldimethylammonium carbonate, imazalil, thiabendazole, orthophenylphenol, guazatine, propiconazole, tebuconazole, pyrimethanil, fludioxonil, azoxystrobin, prochloraz, iprodione, or methyl thiophanate, as well as any combination thereof.

18. Coating, according to claim 16 or 17, wherein said coating is selected from an edible coating, a natural waxen coating or a synthetic waxen coating.
